# EUROPÄISCHE PATENTANMELDUNG

(11) **EP 4 464 576 A1**
(43) Veröffentlichungstag der Anmeldung: **20.11.2024**
(21) Anmeldenummer: 23465577.7
(22) Anmeldetag: 19.12.2023
(51) Int. Cl.: B62D 7/18, B60K 7/00, B62D 5/04

(54) **ACHSSCHENKEL, CORNER-MODUL UND FAHRZEUG**

(30) Priorität: 17.05.2023 EP 23465513; 05.12.2023 EP 23465567
(71) Anmelder: Continental Automotive Technologies GmbH, 30175 Hannover (DE)
(72) Erfinder: Mihalache, Alexandru, 300704 Timisoara (RO); Istrati, Ionut-Sergiu, 300704 Timisoara (RO); Paval, Alexandru, 300704 Timisoara (RO); Sipos, Radu-Ciprian, 300704 Timisoara (RO)
(74) Vertreter: Continental Corporation

(57) **Zusammenfassung**

Die Erfindung betrifft einen Achsschenkel (1) für ein Fahrzeugrad, umfassend einen Radverbindungsabschnitt (2), einen oberen Lenkanbindungsabschnitt (3) und einen unteren Lenkanbindungsabschnitt (4). Der Radverbindungsabschnitt (2) ist zur Verbindung des Achsschenkels (1) mit dem Fahrzeugrad eingerichtet. Der obere Lenkanbindungsabschnitt (3) ist dazu eingerichtet, eine Verbindung des Achsschenkels (1) zu einem Lenkantrieb bereitzustellen. Es soll eine radindividuelle Lenkung mit großem Lenkwinkel ermöglicht und gleichzeitig die Integration weiterer Fahrzeugradkomponenten unterstützt werden. Hierzu ist vorgesehen, dass der obere Lenkanbindungsabschnitt (3), der Radverbindungsabschnitt (2) und der untere Lenkanbindungsabschnitt (4) gemeinsam eine Aussparung (7) von zumindest drei Seiten begrenzen, sodass ein im Radverbindungsabschnitt (2) angeordneter Anschlussabschnitt (8) ein inneres Ende der Aussparung (7) begrenzt und zur Führung mindestens einer Leitung durch die Aussparung (7) eingerichtet ist. Die Erfindung betrifft weiterhin ein Corner-Modul umfassend einen derartigen Achsschenkel (1) und ein Fahrzeug mit mindestens zwei derartigen Corner-Modulen.

## Beschreibung

Die vorliegende Erfindung betrifft einen Achsschenkel für ein Fahrzeugrad, umfassend einen Radverbindungsabschnitt, einen mit dem Radverbindungsabschnitt verbundenen oberen Lenkanbindungsabschnitt und einen mit dem Radverbindungsabschnitt verbundenen unteren Lenkanbindungsabschnitt, wobei der Radverbindungsabschnitt zur Verbindung des Achsschenkels mit dem Fahrzeugrad eingerichtet ist, und wobei der obere Lenkanbindungsabschnitt dazu eingerichtet ist, eine Verbindung des Achsschenkels zu einem Lenkantrieb bereitzustellen. Die Erfindung betrifft weiterhin ein Corner-Modul umfassend einen derartigen Achsschenkel sowie ein Fahrzeug umfassend mindestens zwei derartige Corner-Module.

Ein derartiger Achsschenkel ist beispielsweise aus der CN 106 741 144 A bekannt, die weiterhin ein unabhängiges Vierrad-Lenksystem offenbart. Das Lenksystem umfasst einen Doppelquerlenker-Achsschenkel, wobei mit einem oberen Arm ein Lenkmotor verbunden ist. Der Lenkmotor ist mit einem oberen Lenkanbindungsabschnitt des Achsschenkels verbunden, der in einen Radverbindungsabschnitt übergeht. Ein unterer Arm ist über ein Kugelgelenk mit dem Achsschenkel verbunden. Diese Lösung ermöglicht einen relativ großen maximalen Lenkwinkel.

Ein derartiger Achsschenkel kann zwar gegenüber anderen bekannten Achsschenkeln einen größeren Lenkwinkel bereitstellen und eine radindividuelle Lenkung ermöglichen, es ist aber keine Lösung zur Integration immer komplexer werdenden Radsysteme, z. B. mit Bremse, Sensoren, Radnabenmotor etc. vorgesehen. Weiterhin ist die Lösung der Radaufhängung sehr raumintensiv, wenig stabil und bietet keine Integration einer Federung.

Aus der US 10,625,778 B2 ist eine Lenkungsanordnung mit Achsschenkel offenbart, die die Integration einer Trommelbremse oder Scheibenbremse vorsieht, nicht aber eines Radnabenmotors. Es ist weiterhin keine radindividuelle Lenkung vorgesehen und der Aufbau der Lenkungsanordnung und des Achsschenkels ist hochkomplex und umfasst eine Vielzahl von Komponenten.

Aus der WO 2019/139 545 A1 ist wiederum ein Radnabenmotor mit integrierter Scheibenbremse bekannt. Ein Achsschenkel überdeckt eine x-förmige Statorplatte, wobei beide eine Aussparung für einen Bremssattel der Scheibenbremse in Umlaufrichtung des Fahrzeugrads freilassen. Kühlleitungen und Stromversorgungsleitungen werden bei unterschiedlichen Umlaufwinkeln an der Statorplatte und dem Achsschenkel vorbeigeführt. Es ist keine Lösung für eine radindividuelle Lenkanbindung oder eine Lenkung mit großem Lenkwinkel vorgesehen.

Der Erfindung liegt daher die Aufgabe zugrunde einen Achsschenkel und eine Lenkanbindung eines Fahrzeugrads bereitzustellen, die eine radindividuelle Lenkung mit großem Lenkwinkel ermöglicht und gleichzeitig die Integration weiterer Fahrzeugradkomponenten wie einer Radbremse und / oder einem Radnabenmotor unterstützt.

Erfindungsgemäß wird diese Aufgabe durch einen Achsschenkel nach Anspruch 1, ein Corner-Modul nach Anspruch 10 und ein Fahrzeug nach Anspruch 15 gelöst. Gemäß einem ersten Aspekt der Erfindung wird ein eingangs genannter Achsschenkel bereitgestellt, dadurch gekennzeichnet, dass der obere Lenkanbindungsabschnitt, der Radverbindungsabschnitt und der untere Lenkanbindungsabschnitt gemeinsam eine Aussparung von zumindest drei Seiten begrenzen, sodass ein im Radverbindungsabschnitt angeordneter Anschlussabschnitt ein inneres Ende der Aussparung begrenzt und zur Führung mindestens einer Leitung durch die Aussparung eingerichtet ist.

Ein derart ausgestalteter Achsschenkel bildet mit der von drei Seiten begrenzten Aussparung einen geschützten Bereich, der an einem inneren (dem Fahrzeugrad zugewandten) Ende im Anschlussabschnitt endet. Dadurch lassen sich Leitungen durch den Achsschenkel in das Fahrzeugrad führen, wobei gleichzeitig der Raum für geschützte elastische Verformungen der Leitung(en) bei einer Lenkbewegung des Fahrzeugrads bereitgestellt werden kann. Insbesondere Stromversorgungsleitungen für einen Radnabenmotor, Kühlmittelleitungen und hydraulische Bremsleitungen sind in der Regel weniger flexibel als einfache Signalleitungen (die mit der Leitung aber auch gemeint sein können) und benötigen dementsprechend einen größeren Biegeradius, um eine Lenkbewegung des Fahrzeugrads mit großem Lenkwinkel unbeschadet zu überstehen. Die erfindungsgemäße Lösung rahmt die Aussparung im Wesentlichen radseitig durch den Radverbindungsabschnitt, von unten durch den unteren Lenkanbindungsabschnitt und von oben durch den oberen Lenkanbindungsabschnitt ein. Dadurch ist die Leitung (bzw. die Leitungen) von drei Seiten geschützt und kollidiert dennoch nicht mit dem Achsschenkel bei einer vom Lenkantrieb ausgeführten großwinkligen (>45°) Lenkbewegung. Außerdem wird es möglich, die Leitung(en) möglichst zentral (bei kleinem Radius) und axial innerhalb der Radfelge anzuschließen.

Weiterhin verläuft eine Drehachse des Lenkantriebs vorzugsweise durch die Aussparung, wodurch einfacher sichergestellt werden kann, dass sich eine elastische Verformung der Leitung(en) bei einer Lenkbewegung größtenteils oder vollständig innerhalb der Aussparung bzw. unterhalb des oberen Lenkanbindungsabschnitts abspielt.

Besonders bevorzugt ist der Achsschenkel einstückig ausgebildet. Der Radverbindungsabschnitt, der obere Lenkanbindungsabschnitt und der untere Lenkanbindungsabschnitt sind als ein durchgehendes Bauteil ausgebildet. Der Achsschenkel kann beispielsweise als ein Gussstück, z. B. aus Aluminium, hergestellt werden. Dadurch ist der Achsschenkel besonders stabil und die Installation wird aufgrund einer geringeren Bauteilanzahl gegenüber dem Stand der Technik vereinfacht.

Wenn in dieser Anmeldung von "oben" oder "unten" gesprochen wird, so bezeichnet dies lediglich zur Veranschaulichung die übliche Ausrichtung eines Elements im am Fahrzeug installierten Zustand. Wenn von radial oder axial gesprochen wird, so ist in Ermangelung gegenteiliger Beschreibung eine Zylinderkoordinatenbeschreibung der Fahrzeugrads gemeint, mit der Raddrehachse als z-Achse und dem Radius als senkrechtem Abstand von der Raddrehachse.

Bevorzugte Ausführungsformen und Weiterbildungen der Erfindung sind den jeweiligen Unteransprüchen zu entnehmen.

Vorzugsweise umfasst der Anschlussabschnitt mindestens eine Anschlussöffnung, durch die mindestens eine Leitung und / oder ein Anschluss für eine Leitung führbar ist. Es können auch mehrere Anschlussöffnungen für mehrere Leitungen vorgesehen sein. Es kann auch eine der Anschlussöffnungen für mehrere Leitungen vorgesehen sein, beispielsweise für ein Doppelkabel einer Stromversorgungsleitung eines Radnabenmotors.

Vorzugsweise befindet sich der Anschlussabschnitt in einem Schalenboden eines schalenförmigen Abschnitts des Achsschenkels. Abschnittsweise kann die Aussparung dann sogar von fünf Seiten durch den Achsschenkel umgeben sein. Dadurch wird ein besonders geschützter Bereich zur Führung bzw. zum Anschluss der mindestens einen Leitung geschaffen. Der schalenförmige Abschnitt ist vorzugsweise dazu eingerichtet in Axialrichtung vollständig innerhalb einer Radfelge eines Fahrzeugrades angeordnet zu sein (entsprechendes kann für eine Verwendung des Achsschenkels im erfindungsgemäßen Corner-Modul gelten).

In einer Ausführungsform weisen der obere Lenkanbindungsabschnitt, der Radverbindungsabschnitt und der untere Lenkanbindungsabschnitt gemeinsam in einer Seitenansicht des Achsschenkels einen im Wesentlichen C-förmigen Querschnitt auf. Diese Form sorgt für einen Schutz der mindestens einen Leitung und lässt gleichzeitig ausreichend horizontalen Schwenkraum für einen mit dem unteren Lenkanbindungsabschnitt verbundenen unteren Radträger, der sich teilweise innerhalb der Aussparung bewegen kann. Insbesondere erlaubt eine C-Form große Lenkwinkel bis zu ± 90° und mehr. Besonders bevorzugt ist die C-Form eine abgerundete C-Form. Dadurch wird der Kraftfluss verbessert und der Achsschenkel stabiler.

Bevorzugt ist eine Anschlussöffnung ein Fluidanschluss, der eine im Anschlussabschnitt verlaufende Bohrung umfasst, wobei ein erstes Anschlussende im Wesentlichen parallel aber versetzt zu einem zweiten Anschlussende angeordnet ist. "Versetzt" ist hier insbesondere als in Radialrichtung (nach außen) verlagert zu verstehen. Dadurch kann eine durch die Aussparung geführte Fluidleitung bei einem möglichst kleinen radialen Abstand von der Raddrehachse befestigt werden, wodurch die elastische Verformung der Fluidleitung bei einer Lenkbewegung möglichst symmetrisch abläuft und die maximale elastische Deformation der Fluidleitung begrenzt wird. Gleichzeitig ist es möglich das Fluid zu einer anderen gewünschten radialen bzw. axialen Position im inneren des Fahrzeugrads leiten, ohne dass eine Fluidleitung gebogen werden müsste. Für eine Kühlung des Radnabenmotors bzw. dessen Elektronik ist beispielsweise eine Leitung von Kühlfluid oftmals zu größeren radialen Abständen von der Raddrehachse nötig. Bevorzugt sind zwei Fluidanschlüsse vorgesehen, wobei ein Fluidanschluss als Zufluss und ein Fluidanschluss als Abfluss eingerichtet ist. Die Fluidleitung kann aber auch eine hydraulische Leitung einer hydraulischen Bremse sein.

In einer bevorzugten Ausführungsform umfasst der Radverbindungsabschnitt mindestens eine Bremsverbindungsgeometrie zur Verbindung mit einem Bremssattel einer Scheibenbremse. Besonders bevorzugt ist der Achsschenkel dazu eingerichtet, dass über die mindestens eine Bremsverbindungsgeometrie ein die Bremsscheibe von radial innen umgreifender Bremssattel an dem Achsschenkel befestigt wird. Diese Lösung erlaubt eine besonders einfache, platzsparende und stabile Installation des Bremssattels der Scheibenbremse. Insbesondere kann ein Bremsaktuator des Bremssattels axial vollständig innerhalb der Radfelge angeordnet werden, also zum Radinneren gedreht werden, sodass er nicht nach außen vorsteht. Dadurch steht der Bremsaktuator je nach Positionierung in Umlaufrichtung einer großwinkligen Lenkbewegung des Fahrzeugrads nicht im Weg bzw. ist vor Bordsteinkollisionen geschützt. Die Scheibenbremse ist vorzugsweise eine elektromechanische Scheibenbremse, sie kann aber alternativ auch eine hydraulische Scheibenbremse sein, wobei dann aber auch eine hydraulische Leitung (insbesondere durch den Achsschenkel) notwendig ist.

Es ist bevorzugt, wenn der untere Lenkanbindungsabschnitt eine Hälfte eines, vorzugsweise als Kugelgelenk ausgestalteten, Achsschenkelgelenks zur Verbindung mit einem unteren Radträger eines Corner-Moduls und/oder zur Verbindung mit einer Radaufhängung eines Fahrzeugs umfasst. Ein Kugelgelenk erlaubt sowohl die Drehung um eine Drehachse des Lenkantriebs als auch eine Nickbewegung zwischen Achsschenkel und unterem Radträger z. B. bei einer Federungsbewegung zwischen Fahrzeugrad und Karosserie oder gegebenenfalls bei einer Fahrhöhenverstellung.

Vorzugsweise umfasst der Radverbindungsabschnitt mindestens zwei Radverbindungsgeometrien zur Verbindung mit dem Fahrzeugrad, wobei die mindestens eine Anschlussöffnung, vorzugsweise alle Anschlussöffnungen zwischen den Radverbindungsgeometrien angeordnet sind. Dadurch kann die Leitung(en) bei kleinen radialen Abständen von der Raddrehachse in/durch den Achsschenkel geführt werden und es gibt keine einzelne zentrale Radverbindungsgeometrie, die diesem Platz belegt, wie beispielsweise in der CN 106 741 144 A mittels einer Schraube. Besonders bevorzugt umfasst der Radverbindungsabschnitt vier Radverbindungsgeometrien zur Verbindung mit dem Fahrzeugrad, wobei die mindestens eine Anschlussöffnung, vorzugsweise alle Anschlussöffnungen zwischen den Radverbindungsgeometrien angeordnet sind. Die Radverbindungsgeometrien können beispielsweise eine Befestigung des Achsschenkels am Fahrzeugrad über eine Schraubverbindung, Nietverbindung oder ähnliches ermöglichen.

Bevorzugt umfasst der obere Lenkanbindungsabschnitt eine im Wesentlichen kreisscheibenförmige Lenkanbindungsscheibe, die ein oberes Ende der Aussparung einrahmt und ein oberes Ende des Achsschenkels bildet. Dadurch kann auch bei kompakter Bauweise eines Lenkantriebs ein relativ großes Drehmoment vom Lenkantrieb auf den Achsschenkel übertragen werden. Auch die auf den Achsschenkel ausgeübte Gewichtskraft lässt sich besser verteilen. Die Lenkanbindungsscheibe schützt weiterhin die durch die Aussparung verlaufenden Leitung(en) von oben.

In einem zweiten Aspekt der Erfindung wird ein Corner-Modul für ein Fahrzeug bereitgestellt, umfassend einen Achsschenkel nach einer der vorstehenden Ausführungsformen, ein mit dem Achsschenkel verbundenes Fahrzeugrad, sowie einen mit dem oberen Lenkanbindungsabschnitt verbundenen und dem einzelnen Fahrzeugrad zugeordneten Lenkantrieb. Ein derartiges Corner-Modul ist besonders geeignet um eine radindividuelle Lenkung mit großem maximalen Lenkwinkel (>45°) zu ermöglichen und gleichzeitig einen oder mehrere Leitungen geschützt in das Fahrzeugrad zu führen, um eine oder mehrere Radkomponenten zu steuern oder versorgen.

Bevorzugt verläuft durch den Anschlussabschnitt mindestens eine Stromversorgungsleitung und / oder mindestens eine Kühlmittelleitung für einen in dem Fahrzeugrad angeordneten Radnabenmotor. Insbesondere Radnabenmotoren benötigen für eine Stromversorgung und Kühlung relativ dicke und unflexible Leitungen, die einen verhältnismäßig großen Biegeradius aufweisen. Der erfindungsgemäße Achsschenkel erlaubt es daher auch bei Vorhandensein eines Radnabenmotors eine Lenkanbindung mit großem Lenkwinkel bereitzustellen.

Vorzugsweise verläuft durch den Anschlussabschnitt mindestens eine hydraulische Leitung für eine in dem Fahrzeugrad angeordnete hydraulische Bremse. Hydraulische Leitungen stehen üblicherweise unter Hochdruck und weisen wie Stromversorgungsleitungen und Kühlmittelleitungen einen verhältnismäßig großen Biegeradius auf. Der erfindungsgemäße Achsschenkel erlaubt es daher auch bei Vorhandensein einer hydraulischen Bremse im Fahrzeugrad eine Lenkanbindung mit großem Lenkwinkel bereitzustellen. Die hydraulische Bremse ist vorzugsweise eine hydraulische Scheibenbremse, kann aber auch eine hydraulische Trommelbremse sein. Besonders bevorzugt ist jedoch eine elektromechanische Bremse (z. B. Scheibenbremse oder Trommelbremse) und am meisten bevorzugt eine elektromechanische Scheibenbremse zur Verwendung mit dem Achsschenkel vorgesehen.

In einer Ausführungsform ist der Lenkantrieb dazu eingerichtet, dem Fahrzeugrad eine unabhängige Lenkbarkeit in einem Winkelbereich von mindestens ± 60°, bevorzugt von mindestens ± 75° und besonders bevorzugt von mindestens ± 90°, bereitzustellen, wobei die mindestens eine Leitung eine elastische Verformung um einen entsprechenden Winkel zumindest teilweise in der Aussparung ausführt. Der erfindungsgemäße Achsschenkel mit seiner Aussparung erlaubt dabei eine geschützte elastische Verformung der mindestens einen Leitung, ohne, dass es bei einer Lenkbewegung zu einer Kollision, einer Leitungsüberdehnung oder einer inelastischen Verformung einer Leitung kommt.

In einer bevorzugten Ausführungsform ist der Achsschenkel radial innerhalb einer Scheibenbremse des Fahrzeugrads angeordnet, wobei alle Befestigungselemente zwischen Achsschenkel und dem übrigen Fahrzeugrad ebenfalls radial innerhalb der Scheibenbremse angeordnet sind. Diese Ausführungsform erlaubt eine besonders einfache Montage des Achsschenkels im Corner-Modul und eine gleichzeitige gute Zugänglichkeit der Bremsscheibe, z. B. zu Wartungszwecken.

In einem dritten Aspekt betrifft die Erfindung ein Fahrzeug umfassend mindestens zwei, vorzugsweise vier, Corner-Module nach einer der vorstehenden Ausführungsformen. Dies ermöglicht äußerst flexible neue Karosseriekonzepte, da auf einen zentralen Motor mit mechanischer Verbindung zu zumindest zwei der Fahrzeugräder sowie mechanische Lenk- und Aufhängungselemente zwischen den Rädern verzichtet werden kann. Gleichzeitig können sehr große Lenkwinkel realisiert werden, die beispielsweise extrem kleine Wendekreise und ein Einparken seitwärts in eine Parklücke ermöglichen.

Weitere Einzelheiten der Erfindung ergeben sich aus der Beschreibung der dargestellten Ausführungsbeispiele und den angefügten Ansprüchen.

Die Zeichnungen zeigen:
- Fig. 1: die radabgewandte Seite eines erfindungsgemäßen Achsschenkels,
- Fig. 2: die Radinnenseite des erfindungsgemäßen Achsschenkels der Fig. 1,
- Fig. 3: eine Seitenansicht des erfindungsgemäßen Achsschenkels der Fig. 1 und 2,
- Fig. 4: eine geschnittene Seitenansicht entsprechend Fig. 3,
- Fig. 5: eine Frontansicht des erfindungsgemäßen Achsschenkels der Fig. 1 bis 4,
- Fig. 6: eine Rückansicht des erfindungsgemäßen Achsschenkels der Fig. 1 bis 4,
- Fig. 7: ein erfindungsgemäßes Corner-Modul umfassend einen erfindungsgemäßen Achsschenkel,
- Fig. 8: ein erfindungsgemäßes Fahrzeug umfassend vier erfindungsgemäße Corner-Module.

Bei der nachfolgenden detaillierten Beschreibung bevorzugter Ausführungsformen bezeichnen gleiche Bezugszeichen im Wesentlichen gleiche oder identische Teile in oder an diesen Ausführungsformen. Zur besseren Verdeutlichung der Erfindung sind die in den Figuren dargestellten bevorzugten Ausführungsformen jedoch nicht immer maßstabsgerecht dargestellt.

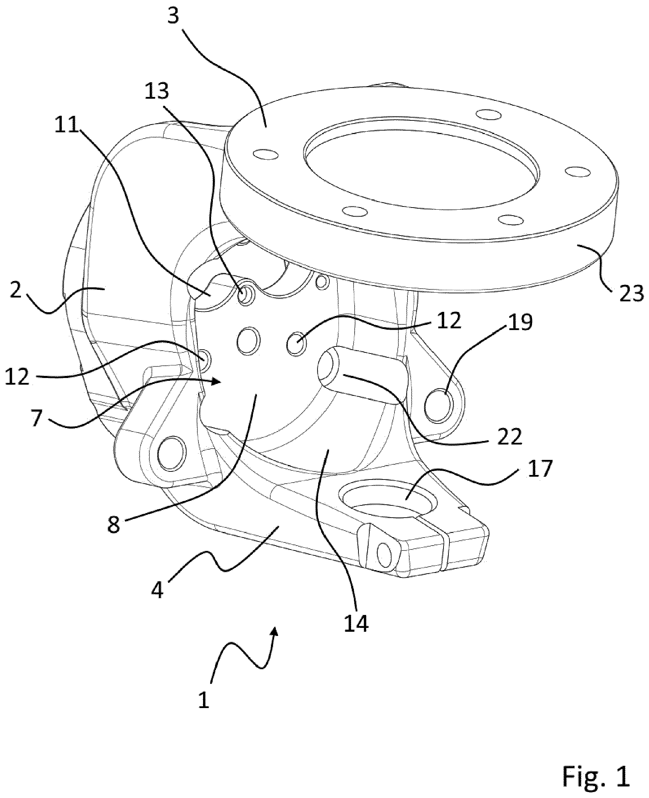

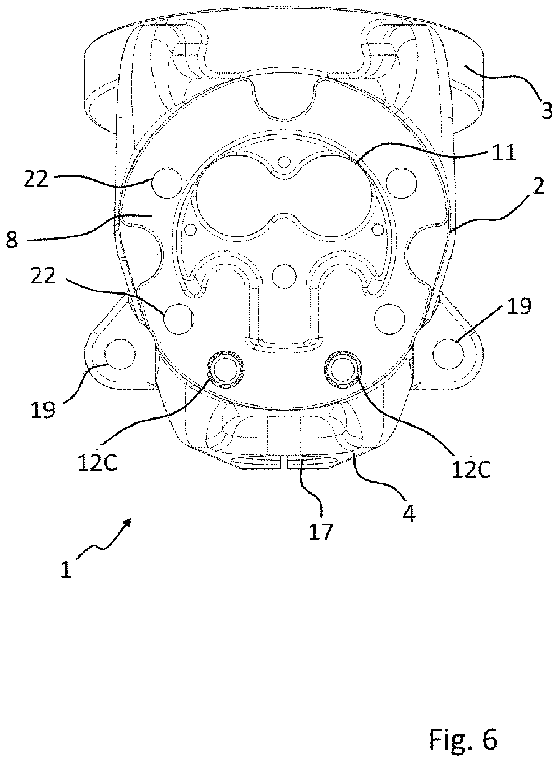

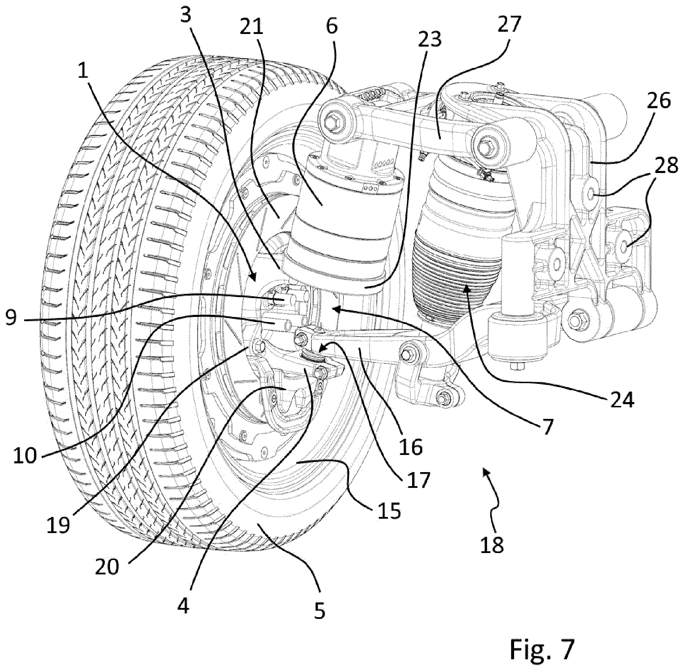

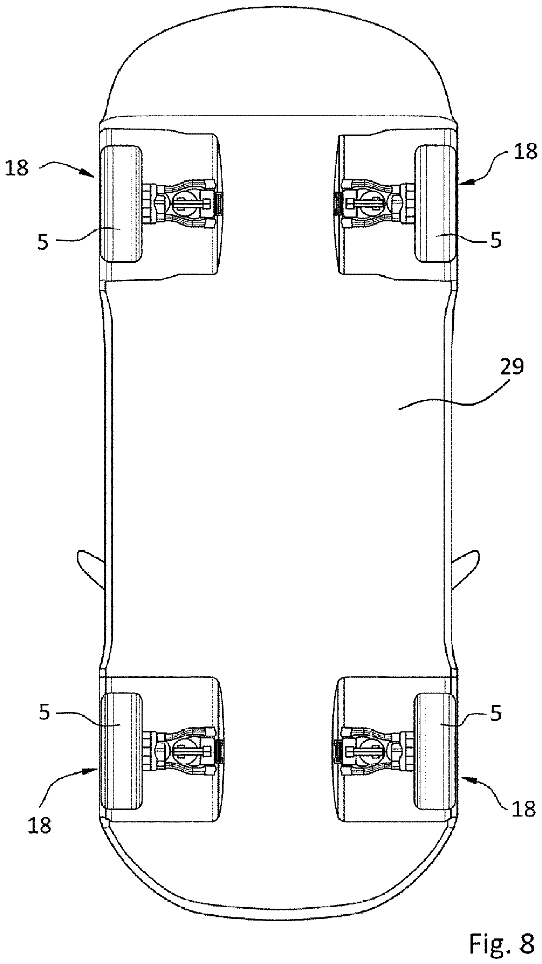

Fig. 1 bis 6 zeigen eine Ausführungsform eines erfindungsgemäßen Achsschenkels 1. Der Achsschenkel 1 umfasst einen Radverbindungsabschnitt 2, einen mit dem Radverbindungsabschnitt 2 verbundenen oberen Lenkanbindungsabschnitt 3 und einen mit dem Radverbindungsabschnitt 2 verbundenen unteren Lenkanbindungsabschnitt 4. Fig. 7 zeigt den Achsschenkel 1 der Figuren 1 bis 6 in einem erfindungsgemäßen Corner-Modul 18. Der Radverbindungsabschnitt 2 ist zur Verbindung des Achsschenkels 1 mit dem Fahrzeugrad 5 (siehe Fig. 7, 8) eingerichtet. Der obere Lenkanbindungsabschnitt 4 ist dazu eingerichtet, eine Verbindung des Achsschenkels 1 zu einem Lenkantrieb 6 (siehe Fig. 7) bereitzustellen.

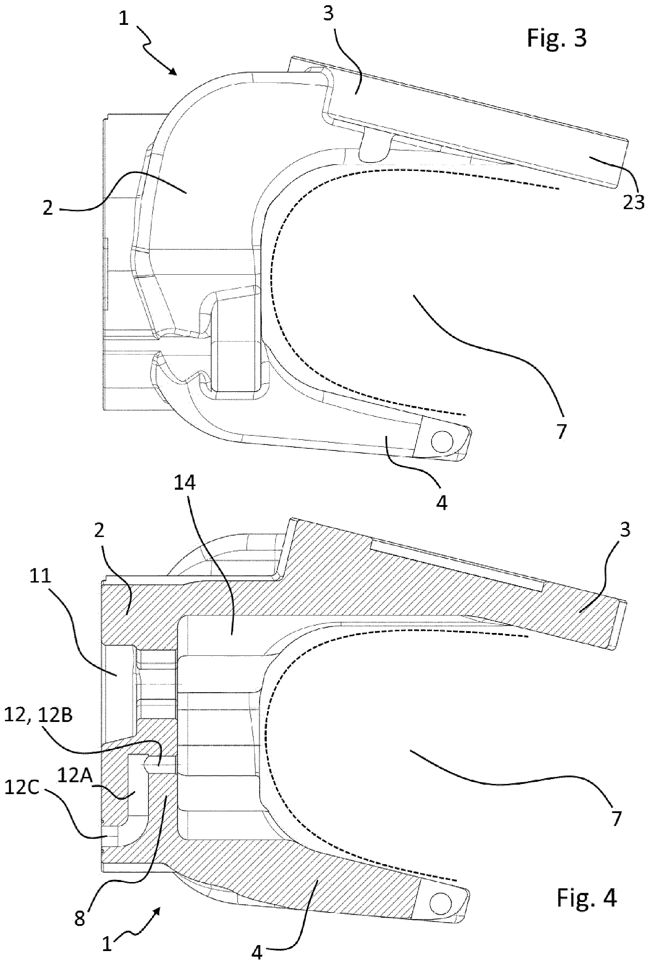

Der obere Lenkanbindungsabschnitt 3, der Radverbindungsabschnitt 2 und der untere Lenkanbindungsabschnitt 4 begrenzen gemeinsam eine Aussparung 7 von zumindest drei Seiten (siehe insbesondere Fig. 3 und 4). Dadurch begrenzt ein im Radverbindungsabschnitt 2 angeordneter Anschlussabschnitt 8 ein inneres Ende der Aussparung 7 und ist zur Führung mindestens einer Leitung 9, 10 (siehe Fig. 7, dort ist der Übersichtlichkeit halber nur das jeweilige Leitungsende dargestellt) durch die Aussparung 7 eingerichtet. Somit lassen sich die Leitungen 9, 10 durch den Achsschenkel 1 in das Fahrzeugrad 5 führen, wobei gleichzeitig der Raum für geschützte elastische Verformungen der Leitungen 9, 10 bei einer Lenkbewegung des Fahrzeugrads 5 bereitgestellt werden kann.

Der Achsschenkel 1 ist einstückig ausgebildet. Mit anderen Worten sind der Radverbindungsabschnitt 2, der obere Lenkanbindungsabschnitt 3 und der untere Lenkanbindungsabschnitt 4 als ein durchgehendes Bauteil z. B. als Aluminium-Gussstück hergestellt.

In den Anschlussabschnitt 8 sind mehrere Anschlussöffnungen 11, 12, 13 angeordnet, durch die die Leitungen 9, 10 und / oder ein Anschluss für die Leitungen 9, 10 führbar sind. Die Anschlussöffnung 11 ist eine Doppelöffnung in Form einer liegenden 8 für ein Doppelkabel einer Stromversorgungsleitung 9 eines Radnabenmotors.

Zwei Anschlussöffnungen 12 sind Fluidanschlüsse, die je eine im Anschlussabschnitt 8 verlaufende Bohrung 12A umfassen, wobei ein erstes Anschlussende 12B im Wesentlichen parallel aber versetzt zu einem zweiten Anschlussende 12C angeordnet ist (siehe insb. Fig. 4). Dadurch können durch die Aussparung 7 geführte Fluidleitungen 10 bei einem möglichst kleinen radialen Abstand von der Raddrehachse befestigt werden, wodurch die elastische Verformung der Fluidleitungen 10 bei einer Lenkbewegung möglichst symmetrisch abläuft und die maximale Deformation der Fluidleitungen 10 begrenzt wird. Gleichzeitig ist es möglich, das Fluid zu einer anderen gewünschten radialen bzw. axialen Position im inneren des Fahrzeugrads 5 leiten, ohne dass eine Fluidleitung 10 innerhalb des Fahrzeugrads 5 mehr als nötig gebogen werden müsste. Für eine Kühlung des Radnabenmotors bzw. dessen Elektronik ist beispielsweise eine Leitung von Kühlfluid oftmals zu und von größeren radialen Abständen von der Raddrehachse nötig. Ein Fluidanschluss ist als Zufluss und ein Fluidanschluss ist als Abfluss eingerichtet.

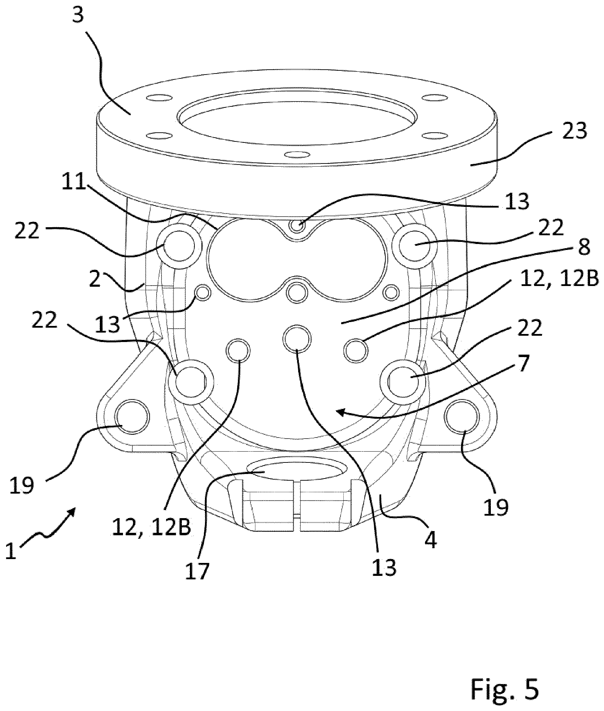

Die Figuren zeigen (fünf) weitere Anschlussöffnungen 13, die beispielsweise zur Führung und zum Anschluss von weiteren Signal- und / oder Stromversorgungskabeln insbesondere für eine Radbremse, einen Radnabenmotor oder Sensoren vorgesehen sein können (siehe Fig. 1 und 5).

Der Anschlussabschnitt 8 ist in einem Schalenboden eines schalenförmigen Abschnitts 14 des Achsschenkels 1 angeordnet. Abschnittsweise kann die Aussparung 7 dann sogar von fünf Seiten durch den Achsschenkel 1 umgeben sein. Dadurch wird ein besonders geschützter Bereich zur Führung bzw. zum Anschluss der Leitungen 9, 10 geschaffen. Der schalenförmige Abschnitt 14 ist in Axialrichtung vollständig innerhalb einer Radfelge 15 des Fahrzeugrads 5 angeordnet (siehe auch Fig. 7).

Aus Fig. 3 und 4 ist erkennbar, dass der obere Lenkanbindungsabschnitt 3, der Radverbindungsabschnitt 2 und der untere Lenkanbindungsabschnitt 4 gemeinsam in einer Seitenansicht des Achsschenkels einen im Wesentlichen C-förmigen Querschnitt aufweisen (hier mit gestrichelten Linien in der Ausnehmung 7 angedeutet, die dann in Seitenansicht auch eine derartige Form aufweisen kann) Diese Form sorgt für einen Schutz der Leitungen 9, 10 und lässt gleichzeitig ausreichend horizontalen Schwenkraum für einen mit dem unteren Lenkanbindungsabschnitt 4 verbundenen unteren Radträger 16, der sich teilweise innerhalb der Aussparung 7 bewegen kann (siehe auch Fig. 7). Insbesondere erlaubt eine C-Form große Lenkwinkel bis zu ± 90° und mehr. Die C-Form ist hier eine abgerundete C-Form, wodurch der Kraftfluss verbessert und der Achsschenkel 1 stabiler wird.

Der untere Lenkanbindungsabschnitt 4 umfasst eine Hälfte eines als Kugelgelenk ausgestalteten Achsschenkelgelenks 17 (siehe insb. Fig. 5 und 7) zur Verbindung mit dem unteren Radträger 16 des Corner-Moduls 18 (oder alternativ zur Verbindung mit einer Radaufhängung eines Fahrzeugs). Ein Kugelgelenk erlaubt sowohl die Drehung um eine Drehachse des Lenkantriebs 6 als auch eine Nickbewegung zwischen Achsschenkel 1 und unterem Radträger 16 z. B. bei einer Federungsbewegung zwischen Fahrzeugrad 5 und Karosserie oder gegebenenfalls bei einer Fahrhöhenverstellung.

Der Radverbindungsabschnitt 2 umfasst zwei Bremsverbindungsgeometrien 19 zur Verbindung mit einem Bremssattel 20 einer Scheibenbremse. Wie aus Fig. 7 ersichtlich wird hier eine Bremsscheibe 21 von radial innen durch den Bremssattel 20 umgriffen. Diese Lösung erlaubt eine besonders einfache, platzsparende und stabile Installation des Bremssattels 20 der Scheibenbremse. Insbesondere kann ein Bremsaktuator des Bremssattels 20 axial vollständig innerhalb der Radfelge 15 angeordnet sein (also zum Radinneren gedreht sein), wodurch der Bremsaktuator je nach Positionierung in Umlaufrichtung einer großwinkligen Lenkbewegung des Fahrzeugrads nicht im Weg steht (z. B. bei Anordnung bei etwa 3 Uhr oder bei etwa 9 Uhr in Umlaufrichtung) bzw. vor Bordsteinkollisionen geschützt ist (bei Anordnung bei etwa 6 Uhr). Da jedoch dennoch Teile des Bremssattels (außer dem Bremsaktuator) axial vorstehen können, ist der Bremssattel vorzugsweise (wie dargestellt) im installierten Zustand unterhalb des Achsschenkels (z. B. bei etwa 6 Uhr in Umlaufrichtung) angeordnet, um großwinkligen Lenkbewegungen so wenig wie möglich im Weg zu stehen.

Der Achsschenkel 1 ist hier radial innerhalb der Scheibenbremse (insbesondere innerhalb der Bremsscheibe 21) des Fahrzeugrads 5 angeordnet, wobei alle Befestigungselemente (und zugehörige Bremsverbindungsgeometrien 19) zwischen Achsschenkel 1 und dem übrigen Fahrzeugrad 5 ebenfalls radial innerhalb der Scheibenbremse angeordnet sind. Diese Ausführungsform erlaubt eine besonders einfache Montage des Achsschenkels 1 und der Bremsscheibe 21 im Fahrzeugrad 5 und eine gleichzeitige gute Zugänglichkeit der Bremsscheibe 21, z. B. zu Wartungszwecken.

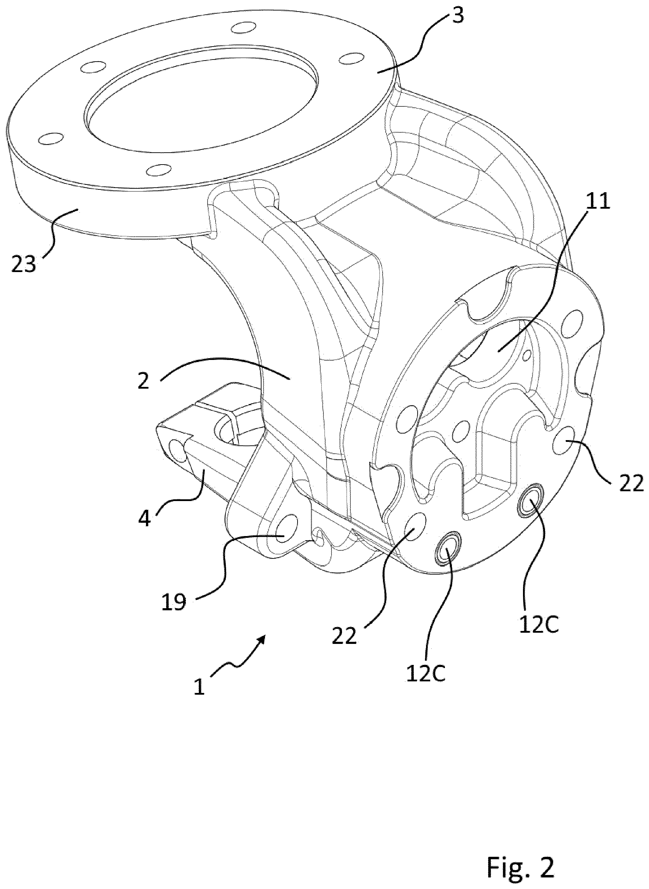

Vorzugsweise umfasst der Radverbindungsabschnitt 2 mindestens zwei (hier vier) Radverbindungsgeometrien 22 zur Verbindung mit dem Fahrzeugrad 5 (siehe insbesondere Fig. 2, 5 und 6). Die Anschlussöffnungen 11, 12, 13, sind zwischen den Radverbindungsgeometrien 22 angeordnet. Beispielsweise können sich alle Anschlussöffnungen 11, 12, 13 innerhalb eines gedachten, durch die Radverbindungsgeometrien 22 verlaufenden, Kreises angeordnet sein (siehe insbesondere Fig. 5). Die Radverbindungsgeometrien 22 erlauben eine Befestigung des Achsschenkels 1 am Fahrzeugrad 5 über eine Schraubverbindung, Nietverbindung oder ähnliches.

Der obere Lenkanbindungsabschnitt 3 weist eine im Wesentlichen kreisscheibenförmige Lenkanbindungsscheibe 23 auf, die ein oberes Ende der Aussparung 7 einrahmt und ein oberes Ende des Achsschenkels 1 bildet. Dadurch kann auch bei kompakter Bauweise eines Lenkantriebs 6 ein relativ großes Drehmoment vom Lenkantrieb auf den Achsschenkel 1 übertragen werden. Auch die auf den Achsschenkel 1 ausgeübte Gewichtskraft lässt sich besser verteilen. Die Lenkanbindungsscheibe 23 schützt weiterhin die durch die Aussparung 7 verlaufenden Leitungen 9, 10 von oben. Die Lenkanbindungsscheibe 23 kann Verbindungsgeometrien zur Verbindung mit einem Rotor oder einem Getriebe des Lenkantriebs 6 umfassen.

Fig. 7 und 8 zeigen eine Ausführungsformen eines erfindungsgemäßen Corner-Moduls 18, sowie eines erfindungsgemäßen Fahrzeugs 29. Das Corner-Modul umfasst einen erfindungsgemäßen Achsschenkel 1, ein mit dem Achsschenkel verbundenes Fahrzeugrad 5, sowie einen mit dem oberen Lenkanbindungsabschnitt 4 verbundenen und dem einzelnen Fahrzeugrad 5 zugeordneten Lenkantrieb 6. Ein derartiges Corner-Modul 18 ist besonders geeignet um eine radindividuelle Lenkung mit großem maximalen Lenkwinkel (>45°) zu ermöglichen und gleichzeitig mehrere Leitungen 9, 10 geschützt in das Fahrzeugrad 5 zu führen, um eine oder mehrere Radkomponenten zu steuern oder versorgen.

Der erfindungsgemäße Achsschenkel 1 rahmt die Aussparung 7 im Wesentlichen radseitig durch den Radverbindungsabschnitt 2, von unten durch den unteren Lenkanbindungsabschnitt 4 und von oben durch den oberen Lenkanbindungsabschnitt 3 ein. Dadurch sind die Leitungen von drei Seiten geschützt und kollidieren dennoch nicht mit dem Achsschenkel 1 bei einer vom Lenkantrieb 6 ausgeführten großwinkligen (>45°) Lenkbewegung. Außerdem wird es möglich, die Leitungen 9, 10 möglichst zentral, also bei kleinem Radius des Fahrzeugrades 5, und axial innerhalb der Radfelge 15 anzuschließen.

Der Lenkantrieb 6 ist bevorzugt dazu eingerichtet, dem Fahrzeugrad 5 eine unabhängige Lenkbarkeit in einem Winkelbereich von mindestens ± 60°, bevorzugt von mindestens ± 75° und besonders bevorzugt von mindestens ± 90° bereitzustellen. Die Leitungen 9, 10 führen bei einer Lenkbewegung dann eine elastische Verformung um einen entsprechenden Winkel zumindest teilweise in der Aussparung 7 aus. Der erfindungsgemäße Achsschenkel mit seiner Aussparung 7 erlaubt eine geschützte elastische Verformung der Leitungen 9, 10, ohne, dass es bei einer Lenkbewegung zu einer Kollision, einer Leitungsüberdehnung oder einer inelastischen Verformung einer der Leitungen 9, 10 kommt.

Das Corner-Modul 18 umfasst außerdem eine Federung 24, die zwischen dem unteren Radträger 16 und einem Hauptträger 26 angeordnet ist. Die Federung 24 fängt Erschütterungen zwischen dem Fahrzeugrad 5 und der Karosserie auf und kann eine Dämpfung umfassen. Die Federung ist vorzugsweise eine Gasfeder, es können aber auch andere Federungstypen verwendet werden. Der Hauptträger 26 ist über einen oberen Radträger 27, der mindestens je ein Drehgelenk an jedem Ende aufweisen kann, mit dem Lenkantrieb 6 verbunden. Der Hauptträger 26 umfasst (hier drei) Karosserieverbindungsgeometrien 28 zur Verbindung mit der Karosserie des Fahrzeugs 29.

Fig. 8 zeigt ein erfindungsgemäßes Fahrzeug 29 umfassend vier derartige Corner-Module 18. Dies ermöglicht äußerst flexible neue Karosseriekonzepte, da auf einen zentralen Motor mit mechanischer Verbindung zu den Fahrzeugrädern 5, sowie einen Großteil der mechanischen Lenk- und Aufhängungselemente zwischen den Fahrzeugrädern 5 verzichtet werden kann. Gleichzeitig können sehr große Lenkwinkel realisiert werden, die beispielsweise sehr kleine Wendekreise und ein Einparken seitwärts in eine Parklücke ermöglichen.

### Bezugszeichenliste

- 1: Achsschenkel
- 2: Radverbindungsabschnitt
- 3: oberer Lenkanbindungsabschnitt
- 4: unterer Lenkanbindungsabschnitt
- 5: Fahrzeugrad
- 6: Lenkantrieb
- 7: Aussparung
- 8: Anschlussabschnitt
- 9: Leitung
- 10: Leitung
- 11: Anschlussöffnung
- 12: Anschlussöffnung
- 13: Anschlussöffnung
- 14: schalenförmiger Abschnitt
- 15: Radfelge
- 16: unterer Radträger
- 17: Achsschenkelgelenk
- 18: Corner-Modul
- 19: Bremsverbindungsgeometrie
- 20: Bremssattel
- 21: Bremsscheibe
- 22: Radverbindungsgeometrie
- 23: Lenkanbindungsscheibe
- 24: Federung
- 26: Hauptträger
- 27: oberer Radträger
- 28: Karosserieverbindungsgeometrie
- 29: Fahrzeug

## Patentansprüche

1. Achsschenkel (1) für ein Fahrzeugrad, umfassend einen Radverbindungsabschnitt (2), einen mit dem Radverbindungsabschnitt (2) verbundenen oberen Lenkanbindungsabschnitt (3) und einen mit dem Radverbindungsabschnitt (2) verbundenen unteren Lenkanbindungsabschnitt (4), wobei der Radverbindungsabschnitt (2) zur Verbindung des Achsschenkels (1) mit dem Fahrzeugrad (5) eingerichtet ist, und wobei der obere Lenkanbindungsabschnitt (3) dazu eingerichtet ist, eine Verbindung des Achsschenkels (1) zu einem Lenkantrieb (6) bereitzustellen, **dadurch gekennzeichnet, dass** der obere Lenkanbindungsabschnitt (3), der Radverbindungsabschnitt (2) und der untere Lenkanbindungsabschnitt (4) gemeinsam eine Aussparung (7) von zumindest drei Seiten begrenzen, sodass ein im Radverbindungsabschnitt (2) angeordneter Anschlussabschnitt (8) ein inneres Ende der Aussparung (7) begrenzt und zur Führung mindestens einer Leitung (9, 10) durch die Aussparung (7) eingerichtet ist.

2. Achsschenkel (1) nach Anspruch 1, **dadurch gekennzeichnet, dass** der Anschlussabschnitt (8) mindestens eine Anschlussöffnung (11, 12, 13) umfasst, durch die mindestens eine Leitung (9, 10) und / oder ein Anschluss für eine Leitung (9, 10) führbar ist.

3. Achsschenkel (1) nach Anspruch 1 oder 2, **dadurch gekennzeichnet, dass** der Anschlussabschnitt (8) in einem Schalenboden eines schalenförmigen Abschnitts (14) des Achsschenkels (1) befindet.

4. Achsschenkel (1) nach einem der vorstehenden Ansprüche, **dadurch gekennzeichnet, dass** der obere Lenkanbindungsabschnitt (3), der Radverbindungsabschnitt (2) und der untere Lenkanbindungsabschnitt (4) gemeinsam in einer Seitenansicht des Achsschenkels (1) einen im Wesentlichen C-förmigen Querschnitt aufweisen.

5. Achsschenkel (1) nach einem der Ansprüche 2 bis 4, **dadurch gekennzeichnet, dass** eine Anschlussöffnung (12) ein Fluidanschluss ist, der eine im Anschlussabschnitt (8) verlaufende Bohrung (12A) umfasst, wobei ein erstes Anschlussende (12A) im Wesentlichen parallel aber versetzt zu einem zweiten Anschlussende (12B) angeordnet ist.

6. Achsschenkel (1) nach einem der vorstehenden Ansprüche, **dadurch gekennzeichnet, dass** der Radverbindungsabschnitt (2) mindestens eine Bremsverbindungsgeometrie (19) zur Verbindung mit einem Bremssattel (20) einer Scheibenbremse umfasst.

7. Achsschenkel (1) nach einem der vorstehenden Ansprüche, **dadurch gekennzeichnet, dass** der untere Lenkanbindungsabschnitt (4) eine Hälfte eines, vorzugsweise als Kugelgelenk ausgestalteten, Achsschenkelgelenks (17) zur Verbindung mit einem unteren Radträger (16) eines Corner-Moduls (18) und/oder zur Verbindung mit einer Radaufhängung eines Fahrzeugs (29) umfasst.

8. Achsschenkel (1) nach einem der Ansprüche 2 bis 7, **dadurch gekennzeichnet, dass** der Radverbindungsabschnitt (2) mindestens zwei Radverbindungsgeometrien (22) zur Verbindung mit dem Fahrzeugrad (5) umfasst, wobei die mindestens eine Anschlussöffnung (11, 12, 13), vorzugsweise alle Anschlussöffnungen (11, 12, 13) zwischen den Radverbindungsgeometrien (22) angeordnet sind.

9. Achsschenkel (1) nach einem der vorstehenden Ansprüche, **dadurch gekennzeichnet, dass** der obere Lenkanbindungsabschnitt (3) eine im Wesentlichen kreisscheibenförmige Lenkanbindungsscheibe (23) umfasst, die ein oberes Ende der Aussparung (7) einrahmt und ein oberes Ende des Achsschenkels (1) bildet.

10. Corner-Modul (18) für ein Fahrzeug (29) umfassend einen Achsschenkel (1) nach einem der vorstehenden Ansprüche, ein mit dem Achsschenkel (1) verbundenes Fahrzeugrad (5), sowie einen mit dem oberen Lenkanbindungsabschnitt (3) verbundenen und dem einzelnen Fahrzeugrad (5) zugeordneten Lenkantrieb (6).

11. Corner-Modul nach Anspruch 10, **dadurch gekennzeichnet, dass** durch den Anschlussabschnitt (8) mindestens eine Stromversorgungsleitung (9) und / oder mindestens eine Kühlmittelleitung (10) für einen in dem Fahrzeugrad (5) angeordneten Radnabenmotor verläuft.

12. Corner-Modul nach Anspruch 10 oder 11, **dadurch gekennzeichnet, dass** durch den Anschlussabschnitt (8) mindestens eine hydraulische Leitung (10) für eine in dem Fahrzeugrad (5) angeordnete hydraulische Bremse verläuft.

13. Corner-Modul nach einem der Ansprüche 10 bis 12, **dadurch gekennzeichnet, dass** das der Lenkantrieb (6) dazu eingerichtet ist, dem Fahrzeugrad (5) eine unabhängige Lenkbarkeit in einem Winkelbereich von mindestens ± 60°, bevorzugt von mindestens ± 75° und besonders bevorzugt von mindestens ± 90°, bereitzustellen, wobei die mindestens eine Leitung (9, 10) eine elastische Verformung um einen entsprechenden Winkel zumindest teilweise in der Aussparung (7) ausführt.

14. Corner-Modul nach einem der Ansprüche 10 bis 13, **dadurch gekennzeichnet, dass** der Achsschenkel (1) radial innerhalb einer Scheibenbremse des Fahrzeugrads (5) angeordnet ist, wobei alle Befestigungselemente zwischen Achsschenkel (1) und dem übrigen Fahrzeugrad (5) ebenfalls radial innerhalb der Scheibenbremse angeordnet sind.

15. Fahrzeug (29) umfassend mindestens zwei, vorzugsweise vier, Corner-Module (18) nach einem der Ansprüche 10 bis 14.
